# EUROPEAN PATENT APPLICATION

(11) **EP 1 868 174 A1**
(43) Date of publication of application: **19.12.2007**
(21) Application number: 06290973.4
(22) Date of filing: 14.06.2006
(51) Int. Cl.: G08C 17/00, G06F 1/32

(54) **Wireless remote control circuit with dual processing units and method therefor**

(71) Applicant: Nien Made Enterprise Co., Ltd., Nantun District, Taichung City (TW)
(72) Inventor: Wu, Ching-Tsung, Taiwan (CN); Huang, Horng-Tsann, Taiwan (CN); Hsu, Hong-Yang, Hsinchu County, Taiwan (CN); Ling, Feng-Chu, Sinfong Township, Hsinchu, Taiwan (CN)
(74) Representative: Loisel, Bertrand

(57) **Abstract**

A wireless remote control circuit with dual processing units and a method is provided, which includes a signal receiving unit, a first and a second processing unit. The first processing unit is connected to the signal receiving unit and switches between an activation mode and a sleep mode at a predefined time. The second processing unit is connected to the first processing unit and is preset in the sleep mode. The first processing unit provides a voltage to activate the signal receiving unit during the activation mode, and transmits a resume signal after obtaining a control signal. Then, the second processing unit enters an activation mode after it receives the resume signal, and enters the sleep mode again after its internal logic circuit completes its operation, so as to reduce the complexity of using a single processing unit to design a circuit and avoid huge power consumption of the circuit.

## Description

### BACKGROUND OF THE INVENTION

### Field of Invention

The present invention relates to a wireless remote control receiving circuit, and more particularly, to a remote control receiving circuit using the dual processing units to achieve the efficiency division and having the power saving function.

### Related Art

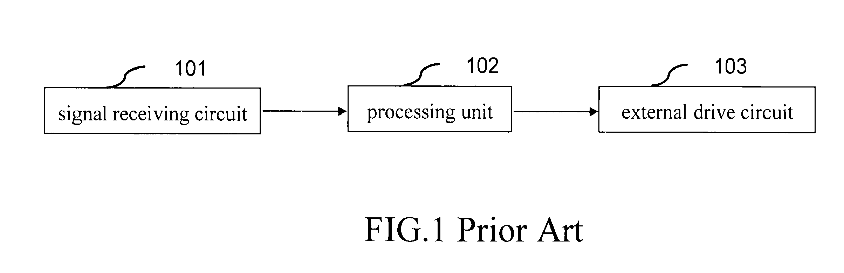

Please refer to FIG. 1 of a conventional remote control circuit designed with a single processing unit. The circuit has a signal receiving circuit 101, a processing unit 102 having the sleep function, and an external drive circuit 103. The signal receiving circuit 101 is used to receive a wireless signal, and convert the wireless signal and sends a control signal after receiving the wireless signal. The processing unit 102 is connected to the signal receiving circuit 101 and enters a sleep state after the initialization. When the processing unit 102 receives the control signal, it performs the resuming action from the sleep state, determines whether the control signal information is correct after resuming, and then sends a corresponding operating signal according to the information contained in the control signal. The external drive circuit 103 is connected to the processing unit 102 and performs the corresponding action after obtaining the operating signal.

However, the technique has the power consumption problem. The functions of the processing unit includes receiving the control signal, sleeping, resuming, determining the correctness of the control signal information, analyzing the information contained in the control signal, sending the corresponding operating signal, and connecting to the signal receiving unit and the external drive circuit. The mechanism is relatively complex, such that for the circuit, in order to make the receiving unit receive the signal at any moment to resume the processing unit main body which is mostly in the sleep state, the processing unit may still consume a reasonable amount of the electric energy. For the apparatus using the battery power, it is a big challenge.

### SUMMARY OF THE INVENTION

Accordingly, it is an object of the present invention to provide a wireless remote control circuit with dual processing units and method for power-saving and increasing the precision of the circuit.

The present invention uses the dual processing units to distinguish the two functions of receiving signal and driving external circuit, thereby simplifying the circuit function of the signal receiving part. The processing unit and the receiving circuit element with significantly low power consumption may be selected. The activating state and the sleep state may be switches alternatively, so as to achieve the power saving function.

The wireless remote control circuit with dual processing units of the present invention comprises a signal receiving unit, a first processing unit and a second processing unit. The first processing unit is connected to the signal receiving unit and the second processing unit. The signal receiving unit is used to receive a radio frequency or optical remote control signal, and is used to send a control signal after receiving the remote control signal. The first processing unit has a plurality of functional logic circuits and a power saving control circuit. The power saving control circuit switches between two operating modes at a predefined time, comprising an activation mode for supplying power to activate the functional logic circuits, and a sleep mode for switching off the power supply of the functional logic circuits. The second processing unit enters a sleep mode after the initialization, i.e. switching off the activating power supply of the plurality of logic functional circuits of the second processing unit, but the circuit of a receiving signal is activated continuously. The first processing unit may send a voltage to activate the signal receiving unit during the activation mode. When a control signal sent by the signal receiving unit is obtained, the information contained in the control signal is analyzed. When analyzing and determining it is a correct signal, a resume signal is sent to the second processing unit. When the second processing unit receives the resume signal, it may determine whether the information contained in the resume signal is correct. If it is correct, the power supply of the logic functional circuits is resumed, and the logic circuits are operated to perform the corresponding activation according to the command information contained in the resume signal.

The present invention provides a method for wireless remote control circuit with dual processing units, which comprises providing a signal receiving unit, a first processing unit, and a second processing unit. The second processing unit is connected to the first processing unit and is preset in a sleep mode. The first processing unit is connected to the signal receiving unit, switches between an activation mode and a sleep mode at a predefined time, and provides a voltage to activate the signal receiving circuit during the activation mode. When the signal receiving circuit activates, it may receive a remote control signal, converts the remote control signal and sends a control signal to the first processing unit. The first processing unit analyzes the information of the control signal. If the control signal is correct, a resume signal is sent to the second processing unit. If the control signal is not obtained during the activation mode or the information of the control signal is not correct, the first processing unit enters a sleep mode after the operating time of the activation mode ends, and switches to the activation mode again after a period of time. When the second processing unit obtains the resume signal, whether the information of the resume signal is correct is analyzed. If the analysis result is correct, the second processing unit enters an activation mode, and performs the activating indicated by the resume signal. If the analysis result is not correct, the second processing unit does not activate and keeps in the sleep mode.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below for illustration only, and which thus is not limitative of the present invention, and wherein:
FIG. 1 is a schematic view of the prior art;
FIG. 2 is a schematic view of the circuit architecture of the present invention; and
FIG. 3 is a flow chart of the remote control method of the present invention.

### DETAILED DESCRIPTION OF THE INVENTION

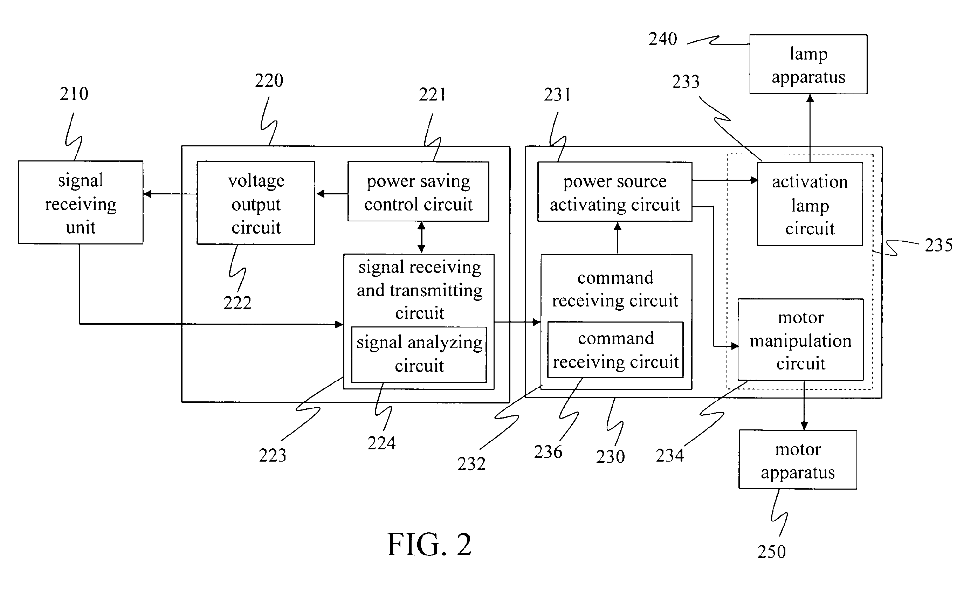

Please refer to FIG. 2 of a schematic view of the circuit architecture of a wireless remote control circuit according to the present invention. The wireless remote control circuit comprises a signal receiving unit 210, a first processing unit 220 and a second processing unit 230. The first processing unit 220 is connected to the signal receiving unit 210 and the second processing unit 230.

The first processing unit 220 includes a power saving control circuit 221, a voltage output circuit 222 and a signal receiving and transmitting circuit 223. The power saving control circuit 221 is connected to the voltage output circuit 222 and the signal receiving and transmitting circuit 223, and switches periodically between two operating modes, comprising an activation mode having relatively short operating time (e.g. 1/9 T, T represents a time unit) and a sleep mode having relatively long operating time (e.g. 8/9 T). During the activation mode, the power saving control circuit 221 provides the power to activate the voltage output circuit 222 and the signal receiving and transmitting circuit 223. The voltage output circuit 222 outputs a voltage to activate the signal receiving unit 210. When the signal receiving and transmitting circuit 223 receives a control signal generated from the signal receiving unit 210, a signal analyzing circuit 224 of the signal receiving and transmitting circuit 223 is used to analyze whether the information contained in the control signal is correct, thereby determining whether to send a resume signal to the command receiving circuit 232. If it is determined to transmit the resume signal, before finishing transmitting the signal, the power saving control circuit 221 may not switch to the sleep mode, and after finishing transmitting the resume signal, the power saving control circuit 221 automatically enters the sleep mode. During the sleep mode, the power saving control circuit 221 may switch off the power supply for the signal receiving and transmitting circuit 223 and the voltage output circuit 222, and the signal receiving unit 210 may stop activating because the activate voltage may not be obtained.

The signal receiving unit 210 is electrically connected to the voltage output circuit 222 and the signal receiving and transmitting circuit 223, and activates when the voltage supplied by the voltage output circuit 222 is obtained, for receiving a remote control signal, and converting it to the control signal and transmitting the control signal to the signal receiving and transmitting circuit 223.

The second processing unit 230 includes a command receiving circuit 232, a power source activating circuit 231 and a logic functional circuit 235. The power source activating circuit 231 is connected to the command receiving circuit 232 and the logic functional circuit 235. The command receiving circuit 232 is connected to the signal receiving and transmitting circuit 223. In the embodiment, the logic functional circuit 235 includes a motor manipulation circuit 234 and an activation lamp circuit 233. The motor manipulation circuit 234 is connected to a motor 250, and the activation lamp circuit 233 is connected a lamp apparatus 240. The second processing unit 230 previously enters a sleep mode, i.e. the power source activating circuit 231 is used to switch off the power supply for the logic functional circuits, but the command receiving circuit 232 still activates continuously. When the command receiving circuit 232 obtains the resume signal, a command analyzing circuit 236 of the command receiving circuit 232 is used to analyze the resume signal , so as to analyze whether the information contained in the resume signal is correct. When the result is correct, the second processing unit enters an activation mode, i.e. make the power source activating circuit 231 supply power to start the operation of the logic functional circuit 235, and the motor manipulation circuit 234 or the activation lamp circuit 233 is activated according to the indication contained in the resume signal, such that the motor 250 and the lamp apparatus 240 perform the corresponding action. The second processing unit 230 enters the sleep mode again after the activating of the motor 250 or the lamp apparatus 240 is finished.

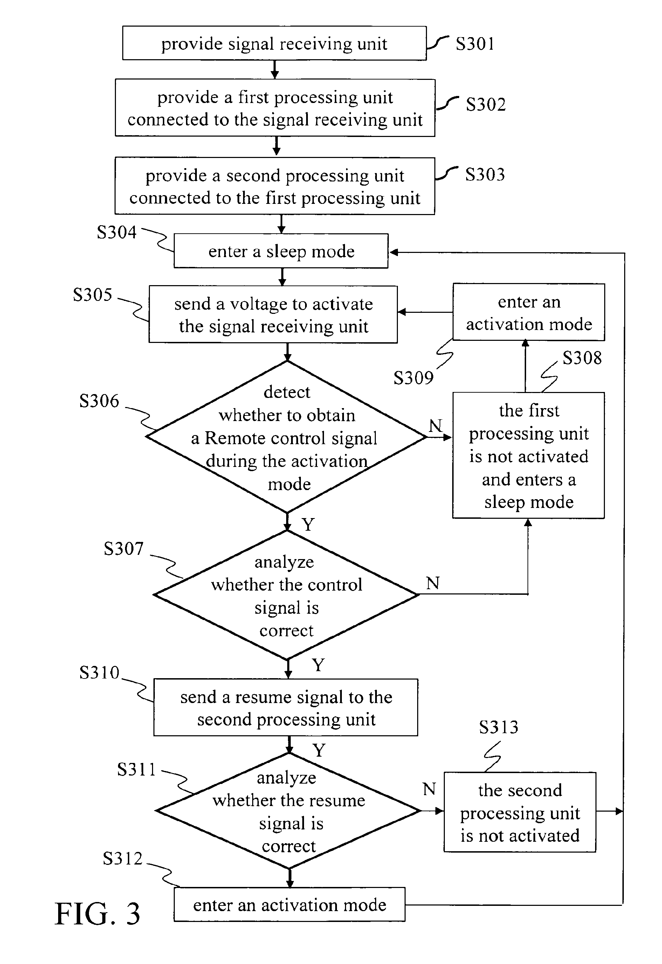

Please refer to FIG. 3 of a flow chart of the activating of the circuit of the present invention. As shown in FIG. 3, a signal receiving unit 210 is provided (step S301) for receiving and converting a wireless signal, and sending a control signal to the signal analyzing circuit 224.

The first processing unit 220 connected to the signal receiving unit 210 is provided (step S302). The first processing unit 220 has two operating modes, and automatically switches between the two operating modes periodically, comprising an activation mode having the operating time of 1/9 T, and a sleep mode having the operating time of 8/9 T.

The second processing unit 230 connected to the first processing unit 220 is provided (step S303). The second processing unit 230 is connected with at least an external apparatus or an external circuit, and be controlled by a logic functional circuit in the second processing unit 230.

The second processing unit 230 enters a sleep mode (step S304). The second processing unit 230 makes a command receiving circuit 232 activate continuously, but switches off the power supply for the other logic functional circuits.

The first processing unit 220 sends a voltage to activate the signal receiving unit 210 (step S305). When the first processing unit 220 is in the activation mode, a voltage output circuit 222 is used to provide a voltage to activate the signal receiving unit 210. When the signal receiving unit 210 is activating, if a wireless signal is obtained, the wireless signal is converted to the control signal and transmitted to the first processing unit 220, and then received by a signal receiving and transmitting circuit 223.

The first processing unit 220 detects whether to obtain a remote control signal during the activation mode (step S306). The first processing unit 220 may continue the detecting action till the operating time of the activation mode 1/9 T ends. If the detecting result is not obtained till the operating time of the activation mode ends, the first processing unit 220 is not activated and enters a sleep mode (step S308). A power saving control circuit 221 of the first processing unit 220 may stop the power supply for the plurality of the logic circuits in the first processing unit 220 for a period of time, i.e. the operating time of the sleep mode 8/9 T, thereby saving the power consumption.

When the operating time of the sleep mode 8/9T ends, the first processing unit 220 automatically enters an activation mode (step S309), and again sends a voltage to activate the signal receiving unit 210 through the first processing unit 220 (step S305).

If the detection result of the first processing unit 220 is that the control signal is obtained, whether the control signal is correct is analyzed (step S307). The signal receiving and transmitting circuit 223 may analyze and recognize whether the information contained in the control signal is correct. If the analysis result is not correct, the first processing unit 220 is not activated and enters a sleep mode (step S308). If the analysis result is correct, a resume signal is sent to the second processing unit 230 (step S310). The resume signal contains the information for activating the logic functional circuits of the second processing unit 230.

Whether the resume signal is correct is analyzed (step S311). After receiving the resume signal, the command receiving unit 232 analyzes the information such as whether the signal is correct and how to activate the second processing unit 230. If the analysis result is correct, the second processing unit 230 enters an activation mode (step S312). A power source activating circuit 231 of the second processing unit 230 supplies the power to activate the logic functional circuits, and performs the actions corresponding to the resume signal. If the analysis result is no, the second processing unit 230 is not activated (step S313), such that the second processing unit 230 maintains in a sleep mode.

The wireless remote control circuit with dual processing units and the remote control method therefor provided in the present invention, which have the following advantages over the prior art, and have the following described distinct functional advancement.
(1) Power-saving: in the prior art, the signal receiving circuit and the drive circuit use the same processing unit, so the power consumption of the circuit may not be reduced efficiently. That is, although the processing unit partially enters the sleep state, the signal receiving circuit still activates continuously for receiving the remote control signal. Because the mechanism of the processing unit is complex, the electric energy may not be saved efficiently. Comparatively, the first processing unit of the present invention is purely used to receive the signal and output the resume signal. The particularly power saving component may be selected, and designed to switch between the sleep mode and the activation mode alternatively. The operating time of the activation mode is much less than that of the sleep mode, without influencing the operation of the user, thus achieving the power saving function. Moreover, the first processing unit may also previously determine the correctness of the signal, and then determine whether to output the resume signal to the second processing unit, thus avoiding the waste of power, and achieving the power saving function for sure.
(2) Increasing the precision of the circuit: in the prior art, as shown in FIG. 1, all the functional circuits are connected to the processing unit. Comparatively, in the present invention, the dual processing units share the two parts of receiving signal and driving external circuit. Therefore, the precision of circuit is increased than that of the prior art in which a single processing unit is used to perform both receiving signal and driving external circuit, thus facilitating the improvement of the individual function and the power saving effect of each circuit.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A wireless remote control circuit with dual processing units, comprising:
a first processing unit, having a plurality of functional logic circuits and a power saving control circuit, wherein the power saving control circuit switches between two operating modes at a predefined time, comprising an activation mode for supplying the power to activate the functional logic circuits, and a sleep mode for switching off the power supply of the functional logic circuits, the functional logic circuits comprise a voltage output circuit for outputting a voltage, and a signal receiving and transmitting circuit for obtaining a control signal and then transmitting a resume signal;
a signal receiving unit, connected to the voltage output circuit, being activated when obtaining the voltage, and outputting the control signal after receiving a wireless signal; and
a second processing unit, preset in a sleep mode, having a command receiving circuit, a power source activating circuit and a plurality of logic functional circuits, wherein the command receiving circuit is connected to the signal receiving and transmitting circuit, makes the second processing and transmitting circuit enter an activation mode when receiving the resume signal, that is, the power source activating circuit supplies power to activate the logic functional circuits, and the second processing unit enters the sleep mode when the logic functional circuits finishing activating, and stops the power supply to the logic functional circuits.

2. The wireless remote control circuit with dual processing units as claimed in claim 1, wherein the signal receiving and transmitting circuit further comprises a signal analyzing circuit for analyzing the information contained in the control signal to form the different resume signals.

3. The wireless remote control circuit with dual processing units as claimed in claim 1, wherein when the signal receiving and transmitting circuit obtains the control signal, the power saving control circuit stops the activating of switching to the sleep mode before the transmitting of the resume signal is finished.

4. The wireless remote control circuit with dual processing units as claimed in claim 1, wherein the command receiving circuit further comprises a command analyzing circuit, for analyzing the resume signal, and making the power source activating circuit to activate the different logic functional circuits according to the resume signal.

5. A method for wireless remote control circuit with dual processing units, comprising:
providing a signal receiving unit;
providing a first processing unit to connect the signal receiving unit;
providing a second processing unit to connect the first processing unit;
making the second processing unit enter a sleep mode, and only making a command receiving circuit of the second processing unit activate continuously;
sending a voltage through the first processing unit to activate the signal receiving unit;
detecting whether to obtain a remote control signal by the first processing unit during the activation mode, the signal receiving unit transmitting a control signal to the first processing unit when obtaining a remote control signal;
analyzing whether the remote control signal is correct if the detecting result is that the remote control signal is obtained, wherein if the analysis result is correct, a resume signal is sent to the second processing unit; and
analyzing whether the resume signal is correct, using the command receiving unit to analyze whether the information contained in the resume signal is correct if the analysis result is yes, the second processing unit enters an activation mode, so as to perform the activating of the resuming signal, and then the second processing unit enters a sleep mode.

6. The method for wireless remote control circuit with dual processing unit as claimed in claim 5, wherein if the detecting result is that the remote control signal is not obtained, the first processing unit is not activated and enters a sleep mode.

7. The method for wireless remote control circuit with dual processing unit as claimed in claim 6, wherein when the first processing unit enters a sleep mode after a period of time, the first processing unit automatically enters an activation mode, and the step of sending a voltage through the first processing unit to activate the signal receiving unit is repeated

8. The method for wireless remote control circuit with dual processing unit as claimed in claim 5, wherein in the step of analyzing whether the remote control signal is correct further comprises a step of:
if the analysis result is not correct, the first processing unit is not activated and enters a sleep mode.

9. The method for wireless remote control circuit with dual processing unit as claimed in claim 5, wherein in the step of analyzing whether the information contained in the resume signal is correct further comprises a step of:
if the analysis result is no, the second processing unit does not activate.

10. The method for wireless remote control circuit with dual processing unit as claimed in claim 5, wherein the first processing unit is set to automatically and periodically in the activation mode or the sleep mode.
